# EUROPÄISCHE PATENTANMELDUNG

(11) **EP 1 522 723 A1**
(43) Veröffentlichungstag der Anmeldung: **13.04.2005**
(21) Anmeldenummer: 03022368.9
(22) Anmeldetag: 06.10.2003
(51) Int. Cl.: F03B 7/00

(54) **Zelle für Wasserradturbine**

(71) Anmelder: Ihrenberger, Adolf, Dipl.-Ing. (FH), 6600 Reutte (AT)
(72) Erfinder: Ihrenberger, Adolf, Dipl.-Ing. (FH), 6600 Reutte (AT)
(74) Vertreter: Lohnert, Wolfgang, Dr.

(57) **Zusammenfassung**

Die Erfindung betrifft eine Zelle für den Einsatz in Wasserradturbinen mit Teilgehäuse und mit im Vergleich zu bekannten Ausführungen verbesserten Betriebsablauf, geringerer Störanfälligkeit, sowie verbessertem Wirkungsgrad und damit höher Wirtschaftlichkeit. Dies wird durch bauliche Maßnahmen an der Zelle, insbesondere durch die geometrische Zellenform, durch neuartige Luftwechselöffnungen und durch Leitelemente für die Führung des in die Zelle eintretenden Wassers erreicht.

## Beschreibung

Die Erfindung betrifft eine Zelle für den Einsatz in einer Wasserradturbine mit waagrechter Radwelle und mit die Radumfangfläche in einem Kreisabschnitt abdeckendem Teilgehäuse, wobei die in der Wasserradturbine Wand an Wand angrenzenden Zellen mit in Seitenansicht etwa birnenförmig gekrümmten Zellböden und mit, die axialen Seitenwände bildenden, kreisringförmigen Radkränzen, jeweils getrennte Öffnungen für den Wassereinlass in und für den dabei erfolgenden Luftaustritt aus der Zelle besitzen.

Mit der Befürwortung und Förderung erneuerbarer Energien gewinnt auch das Wasserrad, bzw. die Wasserradturbine wieder an Bedeutung. Dabei ist unter Wasserradturbine ein Wasserrad zu verstehen, das in einem, dieses zumindest abschnittsweise umgebenden Gehäuse betrieben wird.

Für die Verbreitung und Nutzung der Wasserradturbine, vor allem auch in Kleinkraftwerken, müssen eine hohe Wirtschaftlichkeit und ein hoher energetischer Wirkungsgrad gegeben sein. Dabei spielt die Ausgestaltung der Zellen eines Wasserrades eine herausragende Rolle.

Wichtig sind in diesem Zusammenhang geeignete Maßnahmen, um das je nach Gegebenheit oberschlächtig, rückschlächtig, mittelschlächtig oder unterschlächtig eingebrachte Wasser in möglichst voller Nutzung der Fallhöhe energiewirksam bis zum tiefsten Punkt des rotierenden Wasserrades zu transportieren und es dort energiewirksam in des Unterwasser auzubringen. Die Positionierung der Zellen möglichst nahe am Radumfang ist dabei gleichermaßen bedeutsam wie das Verhältnis von radialer Zellenhöhe zum Wasserraddurchmesser. Baulichen Maßnahmen zum schnellen, möglichst verwirbelungsfreien Befüllen und Entleeren der Zellen tragen ebenfalls zur Wirkungsgradverbesserung bei.

In Umsetzung der vorstehenden Erkenntnisse sind sowohl Wasserräder bekannt, bei denen die Zellen in das Unterwasser eintauchen, als auch solche, deren Zellen nicht eintauchen.
Es gibt Wasserräder mit für das Wasser offenen und mit verschließbaren Zellen, wobei verschließbare Zellen einen Deckel besitzen, der zum Befüllen der Zelle mechanisch geöffnet, anschließend geschlossen und nach Drehung der Zelle bis in die tiefste Radposition dort wieder mechanisch geöffnet wird.
Das vorzeitige Entleeren der unverschließbaren Zelle wird alternativ mittels Aufhängen der Zellen in parallel zur Radachse ausgerichteten Gelenkwellen oberhalb des Zellenschwerpunktes gelöst. Die Zellen müssen zum Entleeren mechanisch gekippt werden.

Eine weitere bekannte Maßnahme gegen eine vorzeitige Entleerung der unverschließbaren Zelle ist die zuminest abschnittsweise Einhüllung des Teilgehäuse.

Stellvertretend für die bekannten Ausführungen werden nachfolgend einzelne typische Vertreter unterschiedlicher Wasserräder und deren Zellen beschrieben.

Als Beispiel für ein Wasserrad mit beweglichem, mechanisch steuerbarem Zelldeckel wird die US 4 385 497 genannt. Die technisch aufwendige Mechanik mit offensichtlich hoher Störanfälligkeit, bei gleichzeitig vergleichsweise geringem, mit einer Radumdrehung transportiertem Wasservolumen, macht diese Ausführung höchst unwirtschaftlich.
Als Beispiel für Systeme mit Einzelaufhängung der Zelle in Drehgelenken und damit für Systeme mit gleifalls mechanisch bewegten Zellenbauteilen, werden die US 1 773 010 und die DE 195 17 261 A1 genannt
Es gibt zwischenzeitlich stark verbesserte Ausführungen von Wasserrädem mit mechanisch bewegten Zellenbauteilen; siehe auch die weiter unten beschriebene EP 0 940 576 B1. Gleichwohl gilt, für die jeweilige Ausführung mehr oder weniger bedeutsam, für alle Typen mit beweglichen Bauteilen in der Zelle, dass ihr vergleichsweise hoher, kostspieliger technischer Fertigungsaufwand eine wirtschaftliche Nutzung erschwert und die Zelle störanfällig macht.

Bekannte Ausführungsbeispiele für Wasserradturbinen mit Gehäuse, bzw. Teilgehäuse, sind die FR 1 078 558 B1 und die DE 195 17 261 A1.
Ersteres Dokument zeigt eine Ausführung mit Teilgehäuse in einem Viertelumfang des Wasserrades und mit mechanisch nicht bewegbar im Wasserrad angebrachten, offenen Zellen. Die Ausführungen zur Spaltbreite zwischen Zellenrand und Gehäuseboden lassen die stets notwendige Bereitschaft zum unvermeidlichen Kompromiss zwischen vorzeitigem Wasserverlust und Reibungsverlust derartiger Systeme erkennen. Die dargestellte Ausgestaltung der Zellen läßt eine nur wenig wirtschaftliche Betriebsweise erkennen. Der Einfluss der Zellenausgestaltung auf den Wirkungsgrad des Wasserrades wurde dort nicht angesprochen.
Letzteres der beiden Dokumente zeigt eine Ausführung mit das gesamte Wasserrad umgebendem Vollgehäuse und mit in Gelenken drehbar aufgehängten Zellen. An die Stelle der vorgenannten Nachteile tritt ein beträchtlicher Wirkungsgradverlust als Folge der für den Wasserauslass mechanisch zu kippenden Zellen.

Die EP 0 940 576 B1 zeigt eine Wasserradturbine mit baulichen Merkmalen, die, gemessen am weiter vome dargestellten Stand der Technik, zu einer Verringerung der dort genannten Nachteile führt. Die Wasserradturbine besitz eine Mehrzahl von Wand an Wand anliegenden Zellen mit, in Seitenansicht, gleichgerichtet gekrümmten Halbschalen als Zellböden. Die einzelne Zelle besitzt, für jede Position auf der Radumlaufbahn abstimmbar, verschließ- und wieder offenbare Öffnungen, getrennt für den Wasserein- und -auslass und für den dabei erfolgenden Luftwechsel in und aus der Zelle. Die Öffnungen für Wasser und Luft besitzen mechanisch verstellbare Zelldeckel, die über ein Gestänge und über ein an der Radaufhängung befestigtes Stellelement mit der Raddrehung synchron geöffnet und geschlossen werden.

Die Ausgestaltung der Zelle dieser Wasserradturbine läßt Verbesserungswünsche offen. Als Folge von beim Wassereinlass sich bildender Wirbel wird die Zelle nur langsam und unvollständig befüllt, bezogen auf die übliche Radumlaufgeschwindigkeit. Die Wasserwirbel schließen Zellenluft ein und verhindern damit ein schnelles, kontolliertes Entweichen der Zellenluft durch die in diesem Betriebszustand geöffneten Luftöffnungen. Das bereits weiter vorne für Wasserräder mit beweglichen Zellenbauteilen als Nachteil genannte, vergleichsweise ungünstige Kosten-/ Nutzen Verhältnis bei unvermeidlich hoher Störanfälligkeit trifft auch hier zu..

Die Aufgabe vorliegender Erfindung ist daher die Bereitstellung einer Zelle für den Wassertransport in der eingangs genannten Wasserradturbine, welche die Nachteile bekannter Ausführungen vermeidet oder wesentlich verringert. Der Vollständigkeitsgrad und die Geschwindigkeit der Befüllung und Entleerung der Zelle mit / vom Wasser, sowie der gleichzeitig zu erfolgende Luftwechsel sollen verbessert werden. Mit dem Verzicht auf im Betrieb bewegliche Zellenbauteilen sollen Baukosten und die Störanfälligkeit gesenkt werden. Der energetische Wirkungsgrad, bezogen auf das jeweils theoretisch verfügbare Wasservolumen, soll ebenso verbessert werden, wie die Wirtschaftlichkeit des Betriebes .

Diese Aufgabe wird erfindungsgemäß für eine Zelle mit den im kennzeichnenden Teil von Anspruch 1 genannten Merkmalen gelöst.
Die Unteransprüche beschreiben bevorzugte Ausgestaltungen und Verwendungen des Erfindungsgegenstandes.

Der Begriff Wasserrad wird in der Praxis vielfach auch für eine Wasserradturbine der eingangs gegebene Definition (Wasserrad mit Gehäuse oder Teilgehäuse) verwendet. Das Wort Wasserrad ist ein Überbegriff für die Wasserradturbine und wird im Folgenden dann als Kurzform für die Wasserradturbine verwendet, ebenso wie die Kurzform "Rad", wenn ein Mißverständnis auszuschließen ist.

Das ortsfeste Teilgehäuse umgibt das Wasserrad, genauer, dessen Radumfangfläche und fallweise zudem die axialen Seiten, bzw, Radkränze des Wasserrades in einem Kreisabschnitt von bevorzugt 90 - 180°, bezogen auf den 360° Vollkreis.
Nach einer bevorzugten Ausführung vorliegender Erfindung ist die bauliche Ausgestaltung des ortsfesten Teilgehäuses auf eine zylinderförmige Rinne einer solchen Abmessung und Lage reduziert, dass die Zylinderfläche auf zwei Seiten von den als blechförmiger Kreisring ausgebildeten Radkränzen des Wasserrades eingefasst ist. Zwischen dem Rand des Teilgehäuses und den Radkranzblechen besteht zudem ein Spalt, ausreichend breit für einen ungebremsten Lauf des Wasserrades und nur so breit, dass, im Zusammenwirken mit der erfindungsgemäßen Zellengeometrie, allenfalls nur unbedeutende Wasservolumen aus dem Spalt austreten.
Das Teilgehäuse ist bei der ober- und rückschlächtigen Wasserbefüllung, bzw. Beaufschlagung, als Viertelgehäuse ausgeführt. Bei der mittel- und unterschlächtigen Beaufschlagung erfolgt die Anpassung an die Höhenverhältnisse des Triebwassers. Die an sich bekannte Wirkung eines Teilgehäuses auf den Wasserhaushalt im umlaufenden Wasserrad, d. h. auf die geringere, vorzeitige Entleerung der Zelle, wird durch die baulichen Merkmale der erfindungsgemäßen Zelle sehr vorteilhaft verbessert.
In einer bevorzugten Ausführung des Teilgehäuses wird dieses bis unter den tiefsten Umfangspunkt des Wasserrades geführt, wobei dieser Punkt um eine Strecke bis zur radialen Höhe des Zellbodens unter dem Wasserspiegel des Unterwassers liegen kann.

Die erfindungsgemäße Zelle ist in einer einheitlichen Bauausführung in Wasserradturbinen für alle Betriebsarten einsetzbar, bei oberschlächtiger, rückschlächtiger, mittelschlächtiger, oder auch unterschlächtiger Beaufschlagung.

Jedes Zellengehäuse besteht aus zwei, gleichgerichtet gekrümmten, birnenförmigen Zellböden und aus zwei, die axialen Seitenwände bildenden Abschnitten der geschlossen kreisringförmigen Radkränzen des Wasserrades.
Der Begriff "birnenförmig" definiert jeweils einen, in Seitenansicht etwa halbkreisförmigem Wandabschnitt des Zellbodens, an den sich Richtung Wassereinlassöffnung stetig ein Wandabschnitt mit kontinuierlich abnehmender Krümmung und an diesen ggf. ein gerader Wandabschnitt anschließen. Die Ausrichtung des Zellbodens im Bereich der Wassereinlassöffnung soll zumindest annähernd mit der Fließrichtung des in die Zelle fließenden Wassers übereinstimmen. Der halbkreisförmige Abschnitt der Zellwand ist im Wasserrad zumindest näherungsweise symmetrisch zur Tangentialrichtung des Rades ausgerichtet.
Der axiale Rand des Zellbodens an der Wassereinlassöffnung ist geschlitzt, oder auch gezahnt ausgeführt. Die Schlitzlänge und der Abstand seitlich aufeinanderfolgender Schlitze wird entsprechend der beabsichtigten Wirkung ausgeführt, wobei die Wirkung in einem Verbiegen des üblicherweise blechartigen Zellbodens in diesem Randbereich besteht, und zwar dann, wenn ein im Wasser mitgeführter Festkörper, z.B. ein Holzstück, zwischen den Zellboden und die Wand des Teilgehäuses gerät und die Rotation des Wasserrades zu blockieren droht.

Der Zellendurchmesser nimmt, in Seitenansicht, aus strömungstechnischen Gründen von der Zellenmitte zur Wasseeinlassröffnung hin kontinuierlich ab.
Die Zellböden werden an ihrem, der Wassereinlassöffnung gegenüberliegenden Rand schlüssig zu einer Komplettzelle zusammengefügt. Dadurch entstehen Wandbereiche im Zellboden, die Wand an Wand an die Nachbarzelle anschließen und solche, die etwa tangential zum Radumfang ausgerichtet, nicht an eine Nachbarzelle, sondern an das zellenfreie Radinnere angrenzen.

Wichtige Erfindungsmerkmale der Zelle sind die von der Wassereinlassöffnung beabstandeten und dieser etwa gegenüberliegende Wandöffnungen im Zellboden für den Luftaustausch in / aus der Zelle beim Wasserein- / -auslass. Die Zelle besitzt für den Luftaustausch eine nicht verschließbare und somit immer geöffnete Wandöffnung zur jeweils nächsten und damit auch zur jeweils vorausgehenden Zelle. Zudem besitzt sie eine verschließbare Wandöffnung im Wandbereich zum zellenfreien Radinneren. Die Wandöffnung zur Nachbarzelle besteht aus einem oder mehreren, in Axialrichtung nebeneinander liegenden Wandschlitzen. An der Wandöffnung zum zellenfreien Radinneren ist ein mechanischer Schieberverschluss, bzw. ein dauerhaft verschließbarer Deckel angebracht.
Diese erfindungsgemäße Ausgestaltung der Luftöffnungen ist der Grund dafür, dass bei allen Betriebsarten, bei der ober-, rück-, mittel- und unterschlächtigen Befüllung, ein einziger, baulich einheitlichen Zellentype Verwendung finden kann.

Bei der oberschlächtigen und bei der rückschlächtigen Befüllung erfolgt die Entlüftung durch die Wandöffnung in die, in Umlaufrichtung folgende, leere Zelle. Die Luftöffnung ins Radinnere ist mechanisch verschlossen. Ohne diesen Verschluss würde unkontrolliert Wasser aus der befüllten Zelle austreten.
Bei der mittelschlächtigen und unterschlächtigen Befüllung ist der mechanische Verschluss der Wandöffnung zum zellenfreien Radinneren dauerhaft geöffnet. Die Entlüftung erfolgt ins Radinnere. Selbst der theoretisch mögliche Austritt von Wasser aus dieser Wandöffnung führt nur zu einer zusätzlichen Befüllung der in Umlaufrichtung vorauseilenden Zelle und damit nicht zu einem Wasser-, bzw. Wirkungsgradverlust.
Unabhängig von der Befüllungsart müssen die Zellen in der Position des unteren Entleerungspunktes belüftet werden, damit das in der Zelle eingeschlossene Wasservolumen möglichst unverwirbelt und schnell ausfließen kann und es nicht infolge von Luftunterdruck und Sogwirkung zu einem verlangsamten Wasserausfluss kommt.
Bei geöffnetem Schieberverschluss erfolgt der Lufteinzug in die Zelle aus dem Radinneren, bei nicht geöffnetem Verschluss aus der Wandöffnung in der, zu der entleerenden Zelle vorauseilenden Zelle.

Gemäß einem weiteren Erfindungsmerkmal weist das Zelleninnere in seinem konkav gekrümmten Wandbereich des Zellbodens ein Umlenkblech mit seinerseits derart gekrümmter Oberfläche auf, dass die Blechkrümmung stetig in die Krümmung des Zellbodens übergeht und dass der beim Beaufschlagen der Zelle in diese eintretende Wasserstrahl durch die Wirkung des Umlenkbleches in seiner Richtung um 140 - 170° umgelenkt wird. Mit der Umlenkung kommt das Wasser so weit zur Ruhe, dass es bei allenfalls nur unbedeutender Wirbelbildung die Zelle füllt und den Luftauslass durch die Luftöffnungen nicht behindert. Der Vorteil ist eine schnelle, vollständige Beaufschlagung der Zelle.

Die Größe der Umlenkbleches wird bevorzugt so dimensioniert, dass es etwa 1/3 des Zellendurchmessers ausfüllt.
Die bevorzugte Positionierung des Umlenkbleches im Zellinneren unterteilt die Querschnittsfläche der Zelle - in Seitenansicht - im Verhältnis 3 : 1 bis 10 : 1, bei kleinerem Flächenanteil für den radial innenliegenden Teil, in dem bei der Beaufschlagung die Zellenluft zusammengedrängt wird und aus dem sie ungehindert entweichen kann - das einströmende Wasser verlegt die Öffnungen nicht. Erst in der Schlussphase des Luftaustritts wird auch dieser Teil der Zelle mit Wasser gefüllt.
Das Umlenkblech bewirkt, neben der Beruhigung des einfließenden Wassers, einen weiteren Vorteil. Es unterstützt die Nutzung der kinetischen Energie des in die Zelle einfließenden Wassers für den Gesamtwirkungsgrad eines Wasserrades mit erfindungsgemäßen Zellen. Die Vermeidung einer nennenswerten Rückwärtsbewegung des in die Zelle einfließenden Wassers relativ zur Umlaufbewegung des Wasserrades verhindert die Ausbildung einer nennenswerten, nach rückwärts gerichteten Drehmomentkomponente , welche sich auf das nutzbare Drehmoment des umlaufenden Wasserrades nachteilig auswirken würde.

Die erfindungsgemäße Zelle wird in einer Wasserradturbine mit sich bis zum tiefsten Punkt des Radumfanges erstreckendem Teilgehäuse betrieben. Dabei erlaubt es die erfindungsgemäße Geometrie der Zelle, das tiefstliegende Ende des Teilgehäuses so weit unter den Wasserspiegel des Unterwassers zu legen, dass ein vollständiges Eintauchen der Zellen in das Unterwasser und zudem ein Zellenentleeren erst in der tiefsten Stellung der Zellen beim Radumlauf erfolgt. Das ist ein Vorteil für den Gesamtwirkungsgrad und führtzu einer, im Vergleich mit bisher bekannten Ausführungen verbesserten Energienutzung, bezogen auf die theoretisch im verfügbaren Wasservolumen vorhandene potentielle und kinetische Energie. Die bei bisherigen Ausführungen aufgetretenen Freifall-, Tauch- und / oder Watverluste fallen weitgehend weg.

Die erfindungsbedingt gegebene Möglichkeit einer sehr schnellen Beaufschlagung der einzelnen Zelle mit großem Wasservolumen innerhalb kürzester Zeit erlaubt die Ausgestaltung von, in
Radialrichtung, vergleichsweise großdimensionierten,hohen Zellen. Je höher aber die radiale Zellenwand im Vergleich mit den übrigen Abmessungen gestaltet werden kann, desto höher ist das auf den Raddurchmesser bezogene, transportierte Wasservolumen, auch Wasserschluckvermögen genannt. Um so günstiger ist das Kosten- / Nutzenverhältnis und die Bilanz der gesamten nutzbaren, beispielsweise in elektrischen Strom umwandelbaren Energie.
Für eine Wasserradturbine mit erfindungsgemäßen Zellen erscheint ein Wirkungsgrad von über 90 % realistisch zu sein.

Die erfindungsgemäße Zelle für Wasserradturbinen wird zur Erzeugung elektrischer und / oder mechanischer Energie verwendet.

Die Erfindung ist nicht auf die im Einzelnen beschriebenen Ausführungsvarianten beschränkt.

Nachfolgend wird die Erfindung anhand der Figuren 1-4 näher beschrieben.
Fig.1 zeigt die Teilansicht einer oberschlächtig betriebenen Wasserradturbine mit den erfindungsgemäßen Zellen als Schnitt semkrecht zur Radachse.
Fig. 2 zeigt einen Detailausschnitt von Fig. 1 und zwar die Ausgestaltung und Verschlusseinstellung der Öffnungen im Zellboden für den Luftwechsel bei rück- und oberschlächtigem Betrieb.
Fig. 3 zeigt die Teilansicht einer mittelschlächtig betriebenen Wasserradturbine mit den erfindungsgemäßen Zellen als Schnitt senkrecht zur Radachse.
Fig. 4 zeigt einen Detailausschnitt von Fig. 3 und zwar die Ausgestaltung und die Verschlusseinstellung der Öffnungen im Zellboden für den Luftwechsel bei mittelund unterschlächtigem Betrieb.

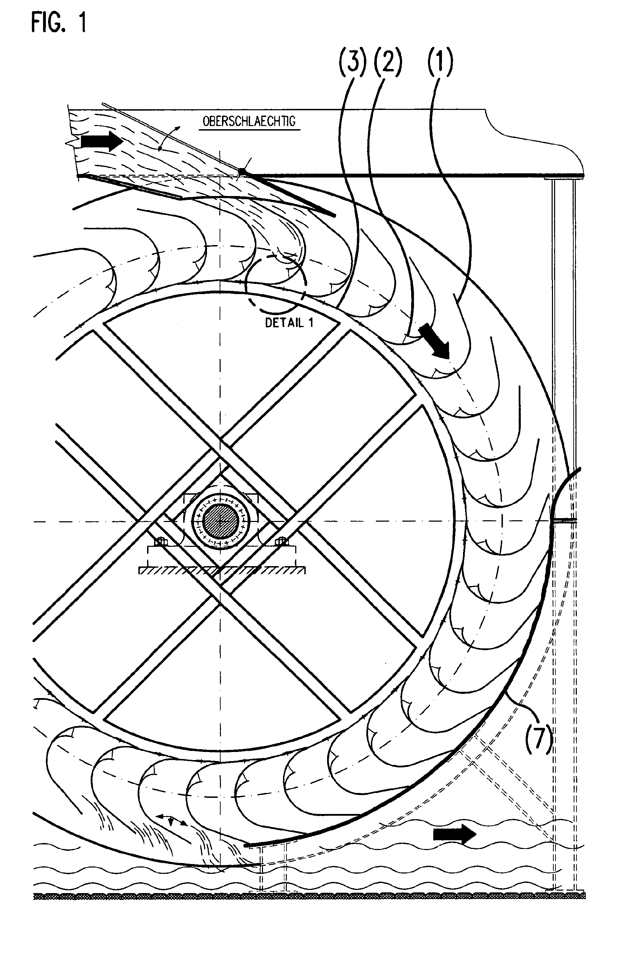

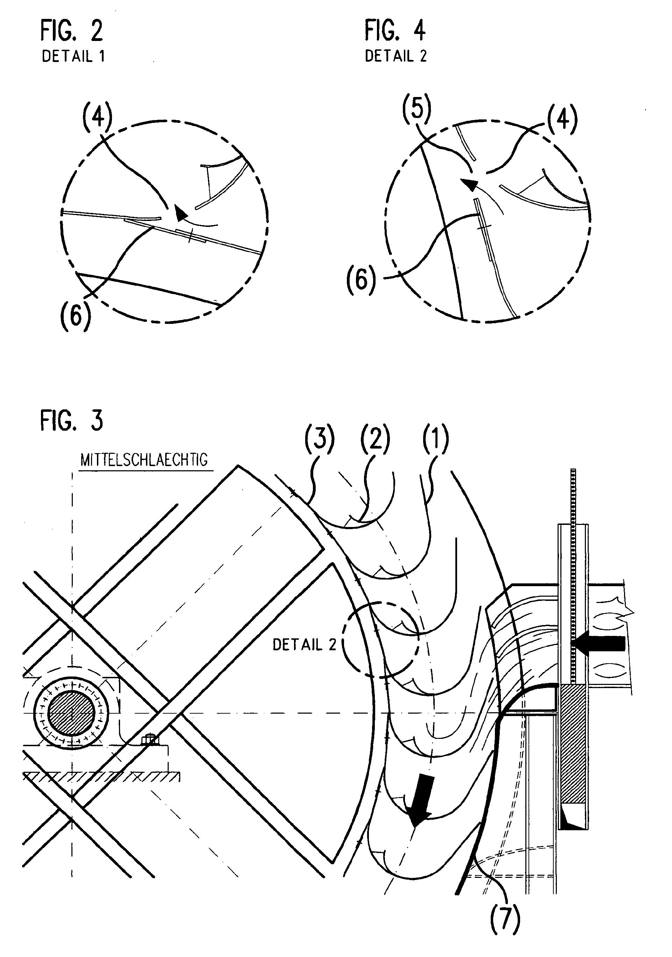

Die Wasserradturbine nach Fig. 1 besitzt ein als Viertelgehäuse ausgestaltetes Teilgehäuse (7), dessen unterer Rand in des Unterwasser eintaucht. Die Figur läßt erkennen, dass der Radumfang von den Abmessungen der axialen, meist blechförmig ausgestalteten, kreisringförmigen Radkränzen bestimmt ist. Die mit ihrer Flächennormalen zur Radachse zeigende, als Rinne ausgeführte Gehäuseoberfläche weist einen kleineren Durchmesser auf, als der durch die Radkränze bestimmte Raddurchmesser; d.h. die Radkränze umschließen die zwei parallelen, senkrecht zur Radachse ausgerichteten Ränder des Gehäuses, wobei ein Spalt zwischen beiden gegeben sein muß. Die birnenförmigen, bezüglich ihrer Krümmung gleich ausgerichteten Zellböden (1) weisen am äußeren Rand geringgekrümmte, oder nichtgekrümmte Abschnitte auf, deren räumliche Ausrichtung mit der Fließrichtung des einströmenden Wassers übereinstimmt.
Der äußere Rand eines jeden Zellbodens liegt in Radialrichtung an der Rinnenoberfläche des Teilgehäuses an, in Praxis nur durch einen schmalen Spalt getrennt.
Nicht darstellbar sind die am äußeren Rand in Axialrichtung nebeneinander angebrachten Schlitze, die ein Verbiegen des Randes im Falle von im Wasser mitgeführten Festkörpern erlauben.
Der Zellendurchmesser im Bereich der Wassereinlassöffnung ist aus strömungstechnischen Gründen verjüngt gegenüber dem Zellendurchmesser im mittleren Abschnitt.
Auf der konkav gekrümmten Seite jedes Zellbodens ist ein Umlenkblech mit einer solchen Blechkrümmung angebracht, dass das in die Zelle einströmende Wasser gegenüber der ursprünglichen Fließrichtung um 140 - 170° umgelenkt wird. Eine gedachte Linie in Fortsetzung dieser Krümmungslinie unterteilt die Querschnittsfläche der Zelle etwa im Verhältnis 5:1.
Auf dem ins zellenfreie Radinnere gerichteten Abschnitt des Zellbodens (3) ist bei einer Zelle ein Detail 1 markiert, das als Fig. 2 in Vergrößerung dargestellt ist. Dabei handelt es sich um den Detailbereich, in dem die erfindungsgemäßen Öffnungen für den Luftaustausch in der Zelle im Zuge der Zellenbeaufschlagung und -entleerung angebracht sind. Die Öffnung zum zellenfreien Radinneren ist mittels eines Schiebers (6) verschlossen. Die Öffnung im Zellboden zur angrenzenden Zelle (4) ist unverschließbar.

Die Figuren 3 und 4 entsprechen den Figuren 1 und 2, mit dem Unterschied einer mittelschlächtigen, anstelle der oberschlächtigen Betriebsweise.

In Fig. 3 mit Detail 2 gekennzeichnet, sind in Fig. 4 in einer Vergrößerung die Öffnungen für den Luftwechsel und die Position eines Schieberverschlusses für diese Betriebsweise dargestellt. Die Öffnung im Zellboden zur benachbarten Zelle (4) ist erfindungsgemäß unverschlossen, die verschließbare Öffnung zum zellenfreien Radinneren (5) ist wegen des geöffneten Schiebers (6) ebenfalls unverschlossen. Die dadurch gegebene Wirkungsweise wurde weiter vorne beschrieben.

## Patentansprüche

1. Zelle für den Einsatz in einer Wasserradturbine mit waagrechter Radwelle und mit die Radumfangfläche in einem Kreisabschnitt abdeckendem Teilgehäuse, wobei die in der Wasserradturbine Wand an Wand angrenzenden Zellen mit, in Seitenansicht etwa birnenförmig gekrümmten Zellböden und mit, die axialen Seitenwände bildenden, kreisringförmigen Radkränzen, jeweils getrennte Öffnungen für den Wassereinlass in und für den dabei erfolgenden Luftaustritt aus der Zelle besitzen,
**dadurch gekennzeichnet,**
**dass** die für das Wasser unverschließbare Zelle zwei, in Seitenansicht in dieselbe Richtung gekrümmte, ihren Abstand zur Wassereinlassöffnung hin verjüngende, am axialen Öffnungsrand geschlitzte Halbschalen als Zellböden besitzt,
**dass** auf der konkav gekrümmten Seite einer Halbschale ein, in das Zelleninnere hineinragendes Umlenkblech mit derart gekrümmter Oberfläche angeordnet ist, dass die Richtung des in die Zelle einfließenden Wassers hierdurch um 140 - 170° geändert wird und
**dass** jede Halbschale in ihrem, der Wassereinlassöffnung abgewandten Randbereich, für den Luftwechsel eine unverschließbare Wandöffnung zur jeweils nächsten Zelle und eine verschließbare Wandöffnung zum zellenfreien Radinneren besitzt.

2. Zelle für Wasserradturbine nach Anspruch 1, **dadurch gekennzeichnet, dass** das Umlenkblech etwa 1/3 des Zellendurchmessers einnehmendes, gebogenes Blech mit kontinuierlich in den Zellboden übergehender Krümmung ist.

3. Zelle für Wasserradturbine nach Anspruch 1 - 2, **dadurch gekennzeichnet, dass** die verschließbare Wandöffnung mit einem Schieberverschluss versehen ist.

4. Zelle für Wasserradturbine nach Anspruch 1 - 3, **dadurch gekennzeichnet, dass** eine Mehrzahl von verschließbaren und unverschließbaren Wandöffnungen in Radachsrichtung nebeneinander im Zellboden angebracht sind.

5. Zelle für Wasserradturbine nach Anspruch 1 - 4, **dadurch gekennzeichnet, dass** die über die Zellböden radial nach außen hinausragenden Radkränze die axialen Seitenwände der Zellen und zusätzlich die axialen Begrenzungen des Teilgehäuses bilden, wobei das Teilgehäuse als Rinne in der Radumfangfläche ausgebildet ist.

6. Zelle für Wasserradturbine nach Anspruch 1 - 5, **dadurch gekennzeichnet, dass** die räumliche Ausrichtung des Zellbodens im Bereich der Wassereinlassöffnung mit der vorbestimmten Fließrichtung des Einlasswassers übereinstimmt.

7. Verwendung der Zelle für Wasserradturbinen nach Anspruch 1 - 6 in Anlagen zur Gewinnung von elektrischer Energie.
